# FASCICULE DE BREVET EUROPEEN

(11) **EP 1 448 955 B1**
(45) Date de publication et mention de la délivrance du brevet: **22.08.2007**
(21) Numéro de dépôt: 02799084.5
(22) Date de dépôt: 20.11.2002
(51) Int. Cl.: G01D 18/00, G01D 1/18, G01P 1/10

(54) **DETECTEUR POUR CONTROLE DE ROTATION**
ROTATIONSDETEKTOR
ROTATION CONTROL SENSOR

(30) Priorité: 26.11.2001 FR 0115465
(43) Date de publication de la demande: 25.08.2004
(73) Titulaire: Schneider Electric Industries SA, 92500 Rueil-Malmaison (FR)
(72) Inventeur: BRAULT, Christophe, F-16600 Touvres (FR); VEDELAGO, Victorio, F-16710 Saint Yrieix (FR)
(74) Mandataire: Dufresne, Thierry
(86) Numéro de dépôt international: PCT/FR2002/003959
(87) Numéro de publication internationale: WO 2003/046484

(56) Documents cités:
- EP-A- 1 130 403
- DE-A- 19 927 759
- US-A- 5 895 441

## Description

La présente invention se rapporte à un détecteur de proximité de type inductif, capacitif, magnétique, photoélectrique ou à un interrupteur de position mécanique utilisé pour faire du contrôle de rotation, notamment dans la surveillance de sous-vitesse ou de survitesse d'un mouvement de rotation.

Les détecteurs pour contrôle de rotation sont fréquemment utilisés dans de nombreuses industries pour faire du contrôle de mouvement, de glissement, de rupture de bande transporteuse, de rupture de courroie, etc.... Ils réunissent dans un même appareil des fonctions classiques de détection de la présence d'une cible à proximité ou au contact du détecteur grâce à un organe capteur et des fonctions de traitement par comptage des informations reçues par le détecteur pendant un temps donné pour comparaison avec par exemple une fréquence de déclenchement préréglée sur l'appareil, de façon à délivrer en sortie un signal binaire résultat de cette comparaison. On obtient ainsi un appareil économique bien adapté pour traiter les problèmes simples de sous-vitesse ou de survitesse.

Le document EP 1130403 décrit un détecteur à contrôle de rotation, devant lequel passe une cible dont on veut contrôler la fréquence de passage par rapport à une fréquence normale de passage. Ce détecteur comporte des moyens de dialogue opérateur constitués d'un bouton-poussoir et d'une diode électroluminescente LED de dialogue sur le détecteur. Le bouton-poussoir sert à positionner le détecteur dans un mode travail ou dans un mode apprentissage. Le mode apprentissage permet au microcontrôleur du détecteur de mesurer une fréquence normale de passage et permet de sélectionner une marge de fonctionnement du détecteur autour de cette fréquence normale. En mode apprentissage, la LED de dialogue associée au bouton-poussoir sert par exemple à guider l'opérateur dans le réglage de la marge de fonctionnement souhaitée du détecteur. Par ailleurs, un tel détecteur comprend aussi généralement une LED de visualisation qui est l'image de l'état de la sortie.

Cependant, durant le montage d'un détecteur pour contrôle de rotation, il est peu pratique d'ajuster en mode statique la distance de la cible de façon à situer celle-ci dans la plage de portée du détecteur. Pour cela, il serait en effet appréciable de donner à l'opérateur de montage, pendant la phase de réglage initial, une information lui indiquant si la cible est placée ou non à une distance satisfaisante, à l'intérieur de la plage de portée du détecteur. Il existe certains détecteurs pour contrôle de rotation qui possèdent à cet effet, en plus d'une LED de visualisation image de la fréquence de passage de la cible, une autre LED de visualisation spécifique dont l'état est fonction de la distance entre la cible et le détecteur. Toutefois cette solution est coûteuse puisqu'elle nécessite un composant de visualisation supplémentaire qui n'est utilisé que pendant la phase de réglage initial et qui peut entraîner par ailleurs, dans un produit de petite taille, une surconsommation électrique surtout en version d'alimentation deux fils.

La présente invention a pour but de remédier à ces inconvénients en proposant une solution économique qui donne à l'opérateur une information lui indiquant, durant la phase de réglage du détecteur, si la cible est ou non située dans la plage de portée du détecteur.

Pour cela, l'invention décrit un détecteur pour contrôle de rotation délivrant un signal de sortie binaire et comportant une LED de signalisation, l'état du signal de sortie binaire et de la LED de signalisation étant fonction, dans un mode de fonctionnement fréquentiel, de la fréquence de passage d'une cible devant le détecteur. Le détecteur se caractérise par le fait qu'il dispose d'un mode de fonctionnement statique dans lequel l'état de la LED de signalisation est fonction de la distance D entre la cible et le détecteur.

Selon une caractéristique, l'état du signal de sortie est, dans le mode statique, fonction de la distance D entre la cible et le détecteur.

Selon une autre caractéristique, le détecteur comprend un organe de sélection positionné dans une première position ou dans une seconde position, permettant de sélectionner le mode statique et le mode fréquentiel. Cet organe de sélection est également utilisé pour paramétrer l'apprentissage du détecteur en mode fréquentiel. Préférentiellement, l'organe de sélection est constitué par un bouton-poussoir dont l'état appuyé correspond à la seconde position.

D'autres caractéristiques et avantages vont apparaître dans la description détaillée qui suit en se référant à un mode de réalisation donné à titre d'exemple et représenté par les dessins annexés sur lesquels :
- la figure 1 montre une vue schématique d'un détecteur conforme à l'invention,
- la figure 2 représente les différents modes de fonctionnement du détecteur.

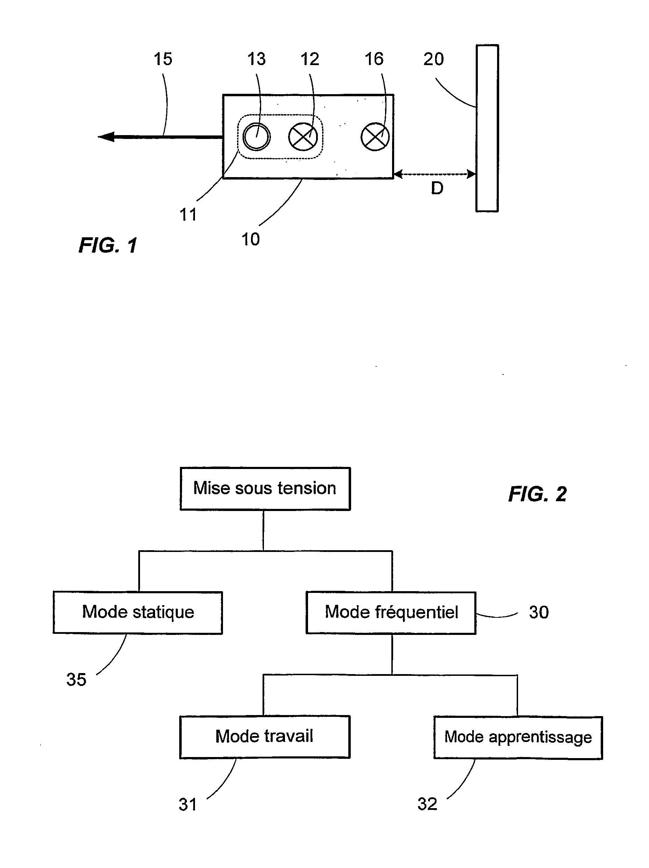

En référence à la figure 1, un appareil de détection 10 est chargé de contrôler la fréquence de passage d'une ou plusieurs cibles 20 de façon à détecter une sous-vitesse et/ou une survitesse par rapport à une fréquence normale de passage.

L'appareil de détection 10, appelé "détecteur" dans le présent document, peut indifféremment être soit un détecteur de proximité inductif, capacitif, magnétique ou une cellule photoélectrique contrôlant le passage d'une cible située à une distance D du détecteur, soit un interrupteur de position mécanique contrôlant le passage d'une cible située au contact du détecteur. Le mode de réalisation présenté ci-après correspond à un détecteur de proximité.

Il est connu qu'un tel détecteur 10 comprenne un organe capteur sensible au passage de la cible 20 et constituant la prise d'information du détecteur 10. L'organe capteur émet un signal capteur dont l'état est fonction de la distance de la cible 20. Ce signal capteur est transmis, via un étage d'amplification et de mise en forme, à une unité de traitement qui le traite de façon à délivrer, au travers d'un étage de puissance, un signal de sortie binaire 15, pouvant être soit à l'état 0, soit à l'état 1. Dans une utilisation du détecteur 10 comme contrôleur de rotation, le signal de sortie binaire 15 est donc fonction de la fréquence de passage de la cible devant le détecteur, en mode de fonctionnement fréquentiel. Par exemple, on peut envisager que le signal de sortie 15 est à l'état 1 quand la fréquence de passage de la cible 20 est supérieure à une fréquence de déclenchement déterminée, et à l'état 0 sinon, en tenant compte d'une hystérésis. De même, on peut envisager que le signal de sortie 15 est à l'état 1 (respectivement 0) quand la fréquence de passage de la cible 20 est comprise à l'intérieur d'une marge de fonctionnement autour d'une fréquence nominale de passage déterminée, et à l'état 0 (respectivement 1) à l'extérieur de cette marge. Le détecteur 10 comprend aussi une LED de signalisation 16, par exemple de couleur jaune, qui est traditionnellement l'image de la sortie 15.

Par ailleurs, le détecteur 10 pour contrôle de rotation comprend des moyens de dialogue opérateur 11 raccordés au microcontrôleur et qui comprennent une LED de dialogue 12, par exemple de couleur verte, ainsi qu'un organe de sélection 13 positionné dans une première position ou dans une seconde position. La LED de dialogue 12 est d'autre part fréquemment utilisée pour indiquer l'alimentation du détecteur.
Le détecteur pour contrôle de rotation travaille selon un mode de fonctionnement fréquentiel 30 qui inclut deux sous-modes de fonctionnement : un mode travail 31 et un mode apprentissage 32. Le mode travail 31 correspond au fonctionnement habituel du détecteur 10 dans lequel celui-ci surveille le passage d'une cible 20 et délivre un signal binaire 15 fonction de la fréquence de passage de cette cible 20. Dans le mode travail 31, la LED de signalisation 16 est directement l'image de la sortie binaire 15, par exemple allumée quand la sortie binaire 15 est à l'état 1. Elle peut donc aider un opérateur, placé à proximité du détecteur, à vérifier le bon fonctionnement du détecteur.
Le mode apprentissage 32 permet d'effectuer le paramétrage du détecteur 10. Ce mode apprentissage comporte par exemple les phases suivantes :
- mesure d'une fréquence normale de passage, à partir d'une cible passant devant le détecteur à une vitesse de référence,
- calcul d'une fréquence de déclenchement et d'une fréquence de réenclenchement à partir de la fréquence normale de passage mesurée et à partir d'une marge de fonctionnement choisie par l'opérateur.

Pour activer le mode apprentissage 32 puis pour paramétrer le détecteur 10 dans ce mode apprentissage 32, afin notamment de sélectionner la marge de fonctionnement souhaitée, l'opérateur utilise l'organe de sélection 13 et la LED de dialogue 12 suivant un protocole de dialogue approprié, tel que celui décrit dans le document EP 1130403.

Néanmoins, avant de faire l'apprentissage du détecteur 10, une première opération est nécessaire pour s'assurer du bon positionnement de la cible 20, c'est-à-dire à s'assurer que la distance D entre la cible 20 et le détecteur 10 est comprise dans la plage de portée du détecteur 10, lorsque la cible 20 passe devant le détecteur 10. Cette opération de réglage est exécutée lors du montage initial du détecteur, lors de la mise en place d'une cible 20, mais aussi lors d'opérations périodiques de maintenance, etc...

Si elle est effectuée avec le passage d'une cible 20 en rotation, l'opération de réglage peut devenir extrêmement dangereuse à cause de la présence de pièces en mouvement à proximité de l'opérateur. Il est donc hautement souhaitable d'exécuter ce réglage avant tout fonctionnement de la machine sur laquelle est fixé le détecteur 10. Mais si l'opération de réglage est effectuée à très basse vitesse ou à vitesse nulle pour éviter ce danger, alors le temps d'intégration nécessaire au détecteur 10 pour calculer une vitesse et envoyer un signal correspondant est forcément très long ce qui rend le réglage de la portée fastidieux. De plus, durant cette opération de réglage, l'opérateur a besoin d'un retour d'information rapide lui indiquant si la cible 20 est à distance correcte du détecteur 10.

C'est pourquoi l'invention décrit un détecteur 10 pour contrôle de rotation ayant la possibilité de faire ce réglage à l'aide d'un mode de fonctionnement supplémentaire, appelé mode statique 35. Dans ce mode statique 35, l'état de la LED de signalisation 16 n'est plus fonction de la fréquence de passage de cette la cible 20, comme en mode travail 31, mais est fonction uniquement de la position de la cible 20 par rapport au détecteur 10, c'est-à-dire de la distance D entre la cible 20 et le détecteur 10. Par exemple, la LED 16 est allumée seulement si la distance D entre la cible 20 et le détecteur 10 est à l'intérieur de la portée du détecteur 10. Ainsi, un opérateur effectuant le réglage du détecteur 10, peut visualiser directement une information lui indiquant si le détecteur 10 (ou si la cible 20) est correctement positionné, ce qui lui permet de mener à bien rapidement le réglage de la distance D.

Dans le mode statique 35, la sortie binaire 15 est généralement fonction de la distance D entre la cible 20 et le détecteur 10, se comportant ainsi comme la LED de visualisation 16, mais peut également rester fonction de la fréquence de passage de la cible 20, comme dans le mode fréquentiel 30. Dans le premier cas, le mode statique 35 est alors similaire au mode de fonctionnement d'un détecteur de proximité classique ne fonctionnant pas en contrôleur de rotation.

Avantageusement, en faisant varier manuellement ou automatiquement la position de la cible, le mode statique 35 permet aussi de vérifier à tout moment, en fin de fabrication mais aussi sur site, que le détecteur 10 présente bien une hystérésis sur la détection de portée. Cette hystérésis est réglée par le constructeur et est nécessaire pour minimiser tout risque de rebond de l'organe capteur au moment des fronts montants ou descendants du signal capteur de présence cible. Il est primordial de vérifier cette hystérésis car, dans une utilisation en contrôleur de rotation, un tel rebond introduirait inévitablement une erreur dans le comptage et donc générerait un signal de sortie 15 du détecteur 10 potentiellement erroné.

Comme le mode statique 35 et le mode apprentissage 32 ne sont jamais simultanés ainsi qu'indiqué en figure 2, alors, selon l'invention, les moyens de dialogue opérateur 11 utilisés durant le mode apprentissage 32, sont également utilisés pour sélectionner le mode statique 35 ou le mode fréquentiel 30, sans pénaliser les fonctionnalités du détecteur 10. Il est alors très économique de proposer un mode statique 35 de réglage tel que décrit ci-dessus dans des détecteurs 10 pour contrôle de rotation possédant déjà un mode apprentissage 32, puisque aucune adjonction de composant supplémentaire n'est alors nécessaire. On apporte ainsi facilement un service supplémentaire appréciable pour l'opérateur pour l'aider à mettre en route son installation.

En particulier, l'organe de sélection 13 permet de sélectionner le mode statique 35 de la façon suivante :
- si l'organe de sélection 13 du détecteur 10 est positionné dans la première position au moment de la mise sous tension du détecteur 10, le mode fréquentiel 30 (incluant le mode travail 31 et le mode apprentissage 32) est sélectionné,
- si l'organe de sélection 13 du détecteur 10 est positionné dans la seconde position au moment de la mise sous tension du détecteur 10, le mode statique 35 est sélectionné.

Suivant un premier mode de réalisation, l'organe de sélection est constitué par un simple bouton-poussoir 13 placé à proximité de la LED de dialogue 12, conservant ainsi une solution simple pour le détecteur 10. La première position de l'organe de sélection correspond à l'état relâché, ou non activé, du bouton-poussoir 13 et la seconde position à l'état appuyé, ou activé, du bouton-poussoir 13.

Dans ce mode de réalisation, le passage du mode fréquentiel 30 au mode statique 35 impose de couper l'alimentation du détecteur 10, puis d'appuyer sur le bouton-poussoir 13 et de ré-alimenter le détecteur 10. Inversement, le passage du mode statique 35 au mode fréquentiel 30 impose de couper l'alimentation du détecteur 10, puis de ré-alimenter le détecteur 10 sans appuyer sur le bouton-poussoir 13. Une fois qu'un des modes statique 35 ou fréquentiel 30 est sélectionné, le bouton-poussoir 13 n'a plus d'influence pour repasser en mode fréquentiel 30 ou statique 35, tant que l'alimentation du détecteur 10 n'est pas coupée. Grâce à l'emploi d'un bouton-poussoir, une coupure de l'alimentation du détecteur 10 en cours de fonctionnement normal, place le détecteur par défaut automatiquement dans le mode fréquentiel 30 correspondant au fonctionnement normal, puisque le bouton-poussoir 13 est par défaut dans une position relâchée.

Suivant un autre mode de réalisation, l'organe de sélection 13 est constitué par un commutateur bistable à deux positions. Dans ce cas, on obtient un détecteur de proximité qui possède deux modes de fonctionnement distincts et utilisables indifféremment : si le commutateur est positionné à la mise sous tension dans une première position, le détecteur fonctionne en mode fréquentiel comme un contrôleur de rotation avec une sortie dont l'état est fonction de la fréquence de passage d'une cible, si le commutateur est positionné à la mise sous tension dans une seconde position, le détecteur fonctionne en mode statique comme un détecteur de proximité classique, avec une sortie dont l'état est fonction de la position d'une cible.

Il est bien entendu que l'on peut, sans sortir du cadre de l'invention, imaginer d'autres variantes et perfectionnements de détail et de même envisager l'emploi de moyens équivalents.

## Revendications

1. Détecteur pour contrôle de rotation (10) délivrant un signal de sortie binaire (15) et comportant une LED de signalisation (16), l'état du signal de sortie binaire (15) et de la LED de signalisation (16) étant fonction, dans un mode de fonctionnement fréquentiel (30), de la fréquence de passage d'une cible (20) devant le détecteur (10), **caractérisé par le fait que** le détecteur (10) dispose d'un mode de fonctionnement statique (35) dans lequel l'état de la LED de signalisation (16) est fonction de la distance (D) entre la cible (20) et le détecteur (10).

2. Détecteur pour contrôle de rotation selon la revendication 1, **caractérisé par le fait que**, dans le mode statique (35), l'état du signal de sortie (15) est fonction de la distance (D) entre la cible (20) et le détecteur (10).

3. Détecteur pour contrôle de rotation selon la revendication 1, **caractérisé par le fait que**, en mode statique (35), la LED de signalisation (16) est allumée lorsque la distance (D) de la cible (20) se trouve à l'intérieur de la portée du détecteur (10).

4. Détecteur pour contrôle de rotation selon l'une des revendications précédentes, **caractérisé par le fait qu'**il comprend un organe de sélection (13) positionné dans une première position ou dans une seconde position, permettant de sélectionner le mode statique (35) et le mode fréquentiel (30).

5. Détecteur pour contrôle de rotation selon la revendication 4, **caractérisé par le fait que** l'organe de sélection (13) est aussi utilisé pour paramétrer l'apprentissage du détecteur (10) en mode fréquentiel (30).

6. Détecteur pour contrôle de rotation selon la revendication 5, **caractérisé par le fait que** l'organe de sélection est constitué par un bouton-poussoir (13) dont l'état appuyé correspond à ladite seconde position.

7. Détecteur pour contrôle de rotation selon la revendication 5, **caractérisé par le fait que** le mode fréquentiel (30) est sélectionné quand l'organe de sélection (13) est positionné sur la première position lors de la mise sous tension du détecteur (10).

8. Détecteur pour contrôle de rotation selon la revendication 7, **caractérisé par le fait que** le mode statique (35) est sélectionné quand l'organe de sélection (13) est positionné sur la seconde position lors de la mise sous tension du détecteur (10).

## Claims

1. Rotation-monitoring detector (10) comprising a binary output signal (15) and a signaling LED (16), and including a frequency operating mode (30) in which the state of the binary output signal (15) and the state of the signaling LED (16) are a function of a passage frequency of a target (20) in front of the detector (10), **characterized in that** the detector (10) includes a static operating mode (35) in which the state of the signaling LED (16) is a function of a distance (D) between the target (20) and the detector (10).

2. Rotation-monitoring detector according to claim 1, **characterized in that**, in the static mode (35), the state of the output signal (15) is a function of the distance (D) between the target (20) and the detector (10).

3. Rotation-monitoring detector according to claim 1, **characterized in that** in static mode (35) the signaling LED (16) is lighted when the distance (D) of the target (20) is within the range of the detector (10).

4. Rotation-monitoring detector according to one of the preceding claims, **characterized in that** it comprises selection means (13) positioned in a first position or in a second position, permitting the selection of the static mode (35) and of the frequency mode (30).

5. Rotation-monitoring detector according to claim 4, **characterized in that** the selection means (13) are also used for parameterizing the learning of the detector (10) in the frequency mode (30).

6. Rotation-monitoring detector according to claim 5, **characterized in that** the selection means are constituted by a push button (13) whose pressed state corresponds to the said second position.

7. Rotation-monitoring detector according to claim 5, **characterized in that** the frequency mode (30) is selected when the selection means (13) are positioned in the first position during the switching on of the detector (10).

8. Rotation-monitoring detector according to claim 7, **characterized in that** the static mode (35) is selected when the selection means (13) are positioned in the second position during the switching on of the detector (10).

## Patentansprüche

1. Rotationssensor (10), der ein binäres Ausgangssignal (15) abgibt und eine Melde-LED (16) umfasst, wobei der Zustand des binären Ausgangssignals (15) und der Melde-LED (16) in einer Frequenzbetriebsart (30) von der Frequenz des Vorbeikommens eines Zielobjekts (20) an dem Sensor (10) abhängig ist, **dadurch gekennzeichnet, dass** der Sensor (10) über eine statische Betriebsart (35) verfügt, in welcher der Zustand der Melde-LED (16) vom Abstand (D) zwischen dem Zielobjekt (20) und dem Sensor (10) abhängig ist.

2. Rotationssensor nach Anspruch 1, **dadurch gekennzeichnet, dass** in der statischen Betriebsart (35) der Zustand des Ausgangssignals (15) vom Abstand (D) zwischen dem Zielobjekt (20) und dem Sensor (10) abhängig ist.

3. Rotationssensor nach Anspruch 1, **dadurch gekennzeichnet, dass** in der statischen Betriebsart (35) die Melde-LED (16) leuchtet, wenn der Abstand (D) vom Zielobjekt (20) innerhalb der Reichweite des Sensors (10) liegt.

4. Rotationssensor nach einem der vorhergehenden Ansprüche, **dadurch gekennzeichnet, dass** er ein Auswahlorgan (13) umfasst, das in eine erste Stellung oder in eine zweite Stellung versetzt wird, wobei es ermöglicht, die statische Betriebsart (35) und die Frequenzbetriebsart (30) auszuwählen.

5. Rotationssensor nach Anspruch 4, **dadurch gekennzeichnet, dass** das Auswahlorgan (13) auch verwendet wird, um das Lernen des Sensors (10) in der Frequenzbetriebsart (30) zu parametrieren.

6. Rotationssensor nach Anspruch 5, **dadurch gekennzeichnet, dass** das Auswahlorgan aus einer Drucktaste (13) gebildet ist, deren gedrückter Zustand der zweiten Stellung entspricht.

7. Rotationssensor nach Anspruch 5, **dadurch gekennzeichnet, dass** die Frequenzbetriebsart (30) ausgewählt wird, wenn sich das Auswahlorgan (13) bei der Spannungszuschaltung zu dem Sensor (10) in der ersten Stellung befindet.

8. Rotationssensor nach Anspruch 7, **dadurch gekennzeichnet, dass** die statische Betriebsart (35) ausgewählt wird, wenn sich das Auswahlorgan (13) bei der Spannungszuschaltung zu dem Sensor (10) in der zweiten Stellung befindet.
